# EUROPEAN PATENT SPECIFICATION

(11) **EP 2 633 405 B1**
(45) Date of publication and mention of the grant of the patent: **18.04.2018**
(21) Application number: 11779303.4
(22) Date of filing: 24.10.2011
(51) Int. Cl.: G06F 9/50, H04L 12/927, H04L 12/911

(54) **APPLICATION SPECIFIC RESOURCE MANAGEMENT**
ANWENDUNGSSPEZIFISCHE VERWALTUNG VON RESOURCEN
GESTION DE RESSOURCES SPECIFIQUE A DES APPLICATIONS

(30) Priority: 26.10.2010 US 912409
(43) Date of publication of application: 04.09.2013
(73) Proprietor: Qualcomm Incorporated, San Diego, CA 92121 (US)
(72) Inventor: RABII, Khosro M., San Diego California 92121 (US)
(74) Representative: Richardson, Julie Kate
(86) International application number: PCT/US2011/057543
(87) International publication number: WO 2012/058170

(56) References cited:
- EP-A2- 1 750 394
- WO-A1-2009/058154
- WO-A2-2008/042813
- US-A1- 2002 022 453
- US-A1- 2004 223 511
- US-A1- 2007 223 421
- US-B1- 7 137 119
- "QoS Interoperability and Policy Management Recommendations", 3G AMERICAS - QOS INTEROPERABILITY AND POLICY MANAGEMENT RECOMMENDATIONS, , 31 December 2007 (2007-12-31), pages 1-29, XP002607416, Retrieved from the Internet: URL:http://www.3gamericas.org/documents/3G Americas_QoSPolicy_Dec19-07.pdf [retrieved on 2010-10-27]

## Description

### BACKGROUND

### Field of the Invention

Present embodiments relate to resource management in an electronic device. More particularly, these embodiments relate to a system and method for adaptively monitoring a plurality of applications making use of a finite number of resources.

### Description of the Related Art

A wide range of electronic devices, including digital televisions, digital direct broadcast systems, wireless communication devices, personal digital assistants (PDAs), laptop computers, desktop computers, digital cameras, digital recording devices, cellular or satellite radio telephones, and the like, require access to a plurality of both internal and external resources. These devices may be contacting mail servers, receiving telephone and text messages, or operating digital cameras, asynchronously. Each of these functions may require lower level operations, such as video encoding and decoding, graphics processing, antennae transmission modification, altered battery demands, etc. The collection of applications, and the resources they use, may be collectively referred to as the mobile device's "ecosystem." Unfortunately, as applications place demands on various resources, the resulting resource allocation generally does not correspond with the user's or system designer's preferred mode of operation. For example, each application may require a predetermined amount of memory, but the amount of memory in any particular device is fixed. Thus, at some point, running one more programs can severely constrain the overall memory allocation of the device. The ecosystem fails because of the limited resources to operate in a preferred manner and may come to a halt prematurely or in an undesirable fashion.

Particularly, many of these resources are able to provide only a finite amount of cumulative service over a period of time, and only a finite amount of service at any given moment. When too many applications access a resource at once, or when a handful of applications monopolize a resource, other applications, perhaps more highly prioritized by the user or designer, will operate suboptimally or fail to operate at all. Furthermore, application developers generally cannot anticipate the particular environment in which their application will be run, nor are they aware of all the limitations imposed by the system designer.

The disclosure EP 1750 394 A2 discloses a method and system for the coordinated administration and monitoring of policies associated with machines and describes the use of at least two machines for identifying policy information based on personality profiles of the machines.

### SUMMARY OF THE INVENTION

One aspect of the present invention is an apparatus as defined in independent claim 1. Another aspect of the invention is a method as defined in independent claim 10. Claim 15 defines still another aspect of the invention being directed to a storage medium storing a program implementing the method.. Further embodiments of the invention are specified in the respective appended dependent claims.

### BRIEF DESCRIPTION OF THE DRAWINGS

The features, objects, and advantages of the disclosed embodiments will become more apparent from the detailed description set forth below when taken in conjunction with the drawings in which like reference characters identify correspondingly throughout and wherein:
FIG. 1 is a top-level block diagram of one embodiment of a mobile device and various relationships with certain local and remote resources.
FIG. 2 is a block diagram of various applications within the wireless device, certain of their relationships with one another, their relation to available resources, and their relation to the resource management system.
FIG. 3 is a schematic diagram of a mobile device depicting the relative structure of the applications and a resource manager module.
FIG. 4 is a logic flow diagram of one process employed by certain embodiments of the resource manager module.
FIG. 5 is a logic flow diagram of one process employed by certain embodiments of the resource manager module.

### DETAILED DESCRIPTION

Embodiments of the invention include systems and methods for managing a plurality of applications as they run within an electronic device. Each device typically has a plurality of predefined resources. In one embodiment, the system and method controls the operation of each application based on electronic negotiations between the application developer's specifications and the electronic system's resource capacity. Adequate resources are allocated to prioritized applications, such as emergency telephone calls and battery life, so that they take precedence over less critical features, such as camera functionality. Gradations in operation are also possible, where applications run in a manner adjusted to the application/resource ecosystem available to them.

In one embodiment, resource consumption is decided for each application, at least in part, by an interface facilitating negotiation between the application developer's specifications and the system designer's specifications. It is not necessary for the system designer to have intimate knowledge of a particular application's optimal behavior. Rather, in this embodiment, the application developer specifies a plurality of suitable operational profiles illustrative of their knowledge of the application's performance characteristics. In this manner, a more optimal ecosystem can be achieved that is satisfactory to both the application developer and to the system designer, without requiring the system designer to have extensive knowledge of each developer's application.

In one example, the electronic device may be a wireless telephone that includes a resource manager module that controls access to electronic resources within the telephone. Such resources may include memory space, I/O ports, and processor time. Each application launched by the user contains a set of application specifications, termed herein a Quality of Service module, as discussed in more detail below, to control the optimum behavior of the application. Thus, when a user launches a particular application, the resource manager module reads the application specifications and makes a determination as to how to handle the new application. If the new application has a higher priority than other running applications, the resource manager module may shut down an application with a lower priority. Alternatively, the resource manager module may restrict resources that are available to lower priority applications and give a full set of required resources to the new application. If the new application has a lower priority than other applications running on the wireless phone, then the resource manager module may not allow the new application to launch, and instead provide a notification to the user that there are insufficient resources to launch the new application.

Thus, in this embodiment, the resource manager module reads the operational requirements of applications and their priority within the electronic device. Using a set of predetermined hierarchical instructions, the resource manager module determines whether the newly running application should have priority over other applications that are already resident in the device. If the new application has a higher priority, then the resource manager module begins reducing the resource allocation to other programs, or terminates the lower priority applications so that the new program can run efficiently. The resource manager module thereby prevents the system from continually launching new applications until such time as the system becomes resource-constrained and starts to fail.

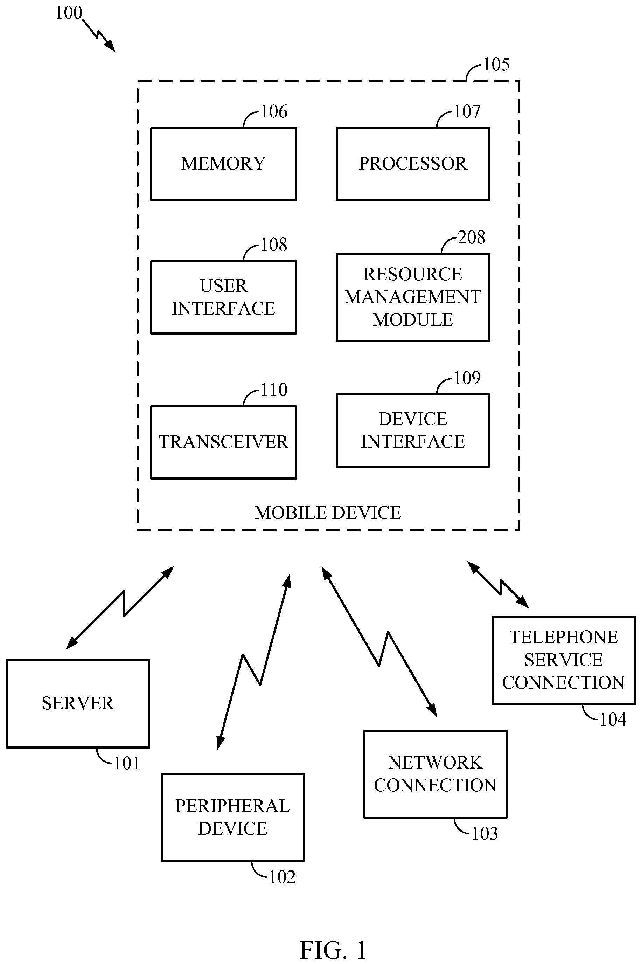

Figure 1 illustrates a system 100 that includes a mobile device 105. The mobile device 105 has a memory 106 and a processor 107. Memory 106 may comprise both static memory storage, and dynamic memory storage. Flash memory, hard drive storage, etc. may also be included in memory 106. The memory 106 may also comprise a Subscriber Identity Module (SIM) or a Removable User Identity Module (R-UIM), which can be inserted into the mobile device. Alternatively, the mobile device 105 may operate based on configuration data programmed by a service provider into the memory 106. The processor 107 may comprise a plurality of subprocessors, including graphics subprocessors, mathematics coprocessors, transcoding control processors, etc. Processor 107 may also serve as the general processor for all applications, including the operating system.

Together, the processor 107 and the memory 106 are used by various other devices and applications, such as a user interface 108, device interface 109, and transceiver 110, typically via an operating system (not shown). The user interface 108 in some embodiments may comprise haptic systems as well as visual and auditory functionality, i.e., keyboards, touch-screen displays, LCDs, arrays of interferometric modulators, audio reception and generation, etc. The device interface 109 may include various ports for the attachment of external hardware. Universal Serial Bus (USB), RS-232 serial, parallel, firewire, etc. are all examples of suitable interface standards that may be accommodated by the device interface 109. These interfaces would connect to various external hardware, such as a peripheral device 102. Examples of peripheral devices include printers, personal health devices (glucose monitor), additional data storage, etc. The device interface 109 may in some embodiments also connect to a computer system to allow the user to set preferences through an external device or software application. The mobile device 105 typically includes both a battery interface and one or more rechargeable batteries or a battery pack (not shown). The battery provides electrical power to electrical circuitry in the mobile device 105, and the battery interface provides for a mechanical and electrical connection for the battery.

The device interface 109 may also be used to update the mobile device, and download software and media through a wireless transceiver 110. The transceiver 110 is typically used for both the wireless reception and transmission of various data. Separate transceivers may be used for voice and digital data, or to provide redundant paths for transmission and reception. The transceiver 110 may also include Infrared Data Association (IrDA) communication or Bluetooth communication. The transceiver 110 may be capable of communicating via CDMA (Code Division Multiple Access) in accordance with the 3GPP2 (Third Generation Partnership Project 2) standards. Additional wireless communication systems include IS-136, IS-95, or IS-833 communication systems, a Global System for Mobile Communications (GSM) communication system, a General Packet Radio Service (GPRS) communication system, a Universal Mobile Telecommunication System (UMTS) communication system, and a Wireless Local Area Network (WLAN) communication system as described by the IEEE (Institute of Electrical and Electronics Engineers) 802.xx standards, for example, the 802.11, 802.15, 802.16, or 802.20 standards, or Fourth Generation (4G) communication systems such as an Orthogonal Frequency Division Multiple Access (OFDM) communication system.

As depicted in Fig. 1, the transceiver 110 is in communication with various remote hardware resources and devices, such as a server 101, a network connection 103, and a telephone service connection 104. These devices may themselves have remote software resources utilized by the mobile device 105. At a given moment, the mobile device 105 may be receiving information from each of the peripheral device 102, server 101, network 103, and telephone service connection 104. For example, in some embodiments the mobile device 105 may be simultaneously managing a call between the user on the telephone service connection 104, polling server 101 for system updates, receiving input from a peripheral device 102, such as a mobile media player, and decoding movie information for subsequent playback from network connection 103. In addition, a specific application may also be placing demands on the local hardware resources of the device, such as requesting that the backlight be used as a torch and that the speakerphone be made active, while requiring that local software resources, such as a Global Positioning System (GPS) client and calendar software, be simultaneously in operation. It is also contemplated that a computer or other equipment not normally capable of wireless communication may be adapted to connect to the mobile device. In such an instance, the resources available and the consequent priorities for each application may vary dramatically. Of particular relevance would be power, which may become abundantly available once the mobile device is placed in a docking station.

Additionally, constraints on application operation may not only be a function of the ecosystem's closed universe. With time, use, and varying external conditions different applications may take precedence to one another. For example, prolonged use of the mobile device may adversely affect resource usage, as when the transceiver 110 heats up with overuse. If the temperature of the transceiver 110 is outside certain specification parameters, the transceiver 110 emits undesirable signal noise, and accordingly, RF-based applications should be accorded reduced priority. Similarly, the temperature of a rechargeable battery of the mobile device may rise outside certain specification parameters for too long and the battery may experience permanent damage. The mobile device 105 may therefore also include one or more temperature sensors and a battery voltage sensor (not shown). For example, a thermistor may be used to detect temperature changes of the battery, battery pack, transceiver 110, processor 107 and other components. Temperature, current and voltage sensors may determine thresholds locally, or be connected directly to the processor.

In addition to the resources shown in Figure 1, one will readily recognize other resources and dependencies common to these mobile devices. For example, many software applications depend on *other* software applications. For example, a low-level servicing process in the operating system may be relied upon by various applications to instantiate or assist certain of their features. Applications may also rely on other processes for polling various resource parameters and for retrieving pertinent information (for example, polling the resource parameters, such as bit-rate, of a decoder or transceiver). Naturally, the application developer cannot anticipate all the possible ecosystem configurations at runtime.

Accordingly, as an independent module, or as a process run on processor 107, a central Resource Manager Module (RMM) 208 specifies designer constraints, which will be used to dictate which of the application developer's preferred modes of operation are to be in effect. For their part, the application developers design their applications so as to interface with the RMM and to run at different levels of operation (or not at all) based on negotiations with the RMM. Applications unable to meet the constraints imposed by the RMM are terminated. In this way, the RMM can efficiently limit demands upon a resource at a given instant, as well as over a period of time.

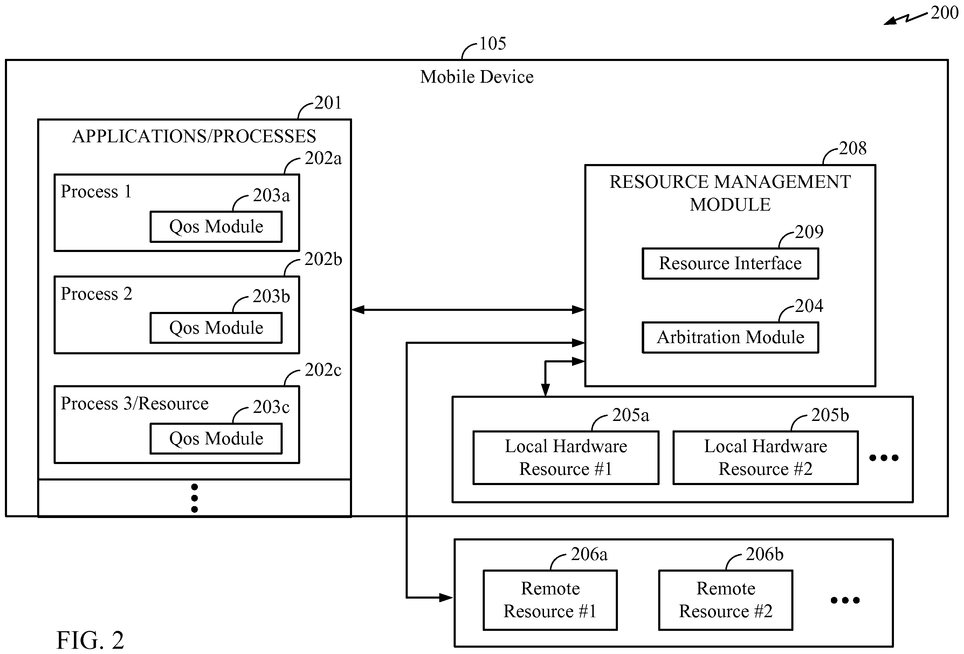

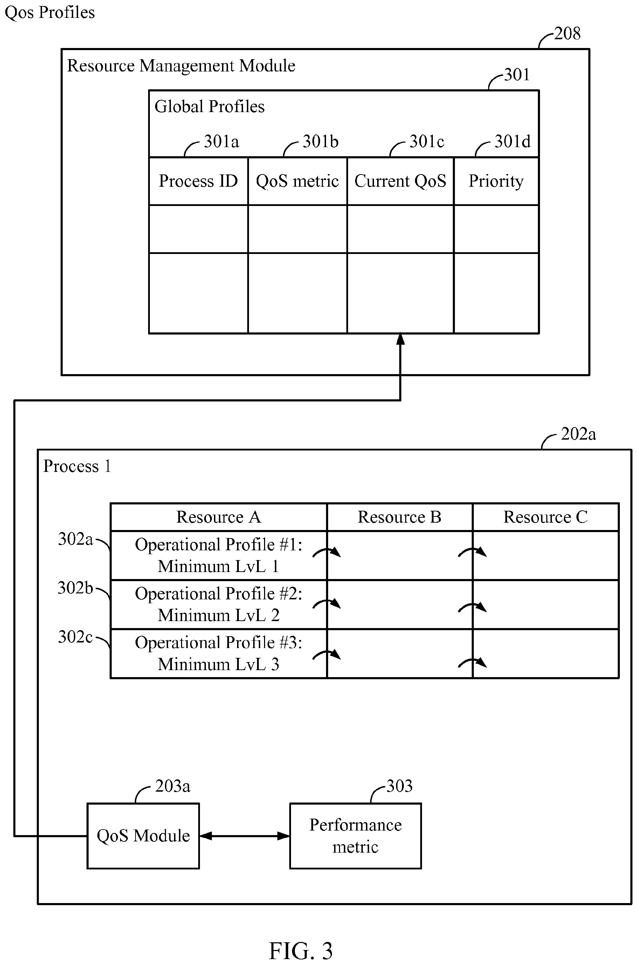

Fig. 2 illustrates a mobile device resource management system comprising various modules within the mobile device and certain of their relationships with one another, and with the RMM 208. One would readily recognize that though the RMM 208 is shown separately from the memory 106, in some embodiments, the RMM 208 would comprise software or firmware stored in the memory 106 and executed by processor 107. Similarly, the relationships between the RMM 208 and a plurality of applications/processes 201 may occur via independent modules, or via the processor 107 and memory 106. Generally speaking, the mobile device 105 comprises the plurality of applications 201 stored within the memory 106, some comprising a portion of an operating system and others created by various developers. Applications may themselves comprise one or more processes, performing various functions in a multi-threaded environment. Throughout this application, as an application may comprise a single process or many different processes, the two terms are used interchangeably as process management is itself a form of application management. Each application/process 202a-c, may be associated with one or more Quality of Service Modules (QoS Modules 203a-203c). In the particular embodiment depicted in Fig. 2, separate QoS Modules 203a-c are associated with separate processes 202a-c. The QoS Modules are written by the developer of each of the applications/processes, based on guidelines issued by the system designer, or other central entity, and specify configurations at which the application is willing to run. Each of these configurations is referred to as an "operational profile" which may also include the preferred resource availability for a given level of operation. Operational profiles may be represented in a variety of schema, including XML, an SQL database, internal software data structures (a part of the application code), etc. The operational profile serves as one possible means for specifying an application's preferred set of operational constraints. The functions of the QoS Module will be discussed in detail below with respect to Fig. 3. Although referred to as a "module" the QoS Module may, in some embodiments, comprise a collection of operational profiles.

Resource Manager Module 208 comprises a collection of tools which interacts with the applications/processes 201 and a plurality of resources 205, 206. Resource interface 209 identifies and monitors various resources of interest to each of the applications/processes. An arbitration module 204 makes determinations regarding the proper operation of a given ecosystem based on at least one of the QoS Modules of each process, the resources available, and a "global operational profile" specifying generally desired operations of the mobile device. The global operational profile may also be represented in a variety of schema, including XML, an SQL database, internal software data structures (a part of the application code), etc. The global operational profile serves as one possible means for specifying a global set of operational constraints. The functions of the Arbitration Module 204 will also be discussed in detail below with respect to Fig. 3

Resources 205, 206 comprise both local resources 205a-b and remote resources 206a-b. As mentioned, local resources may also comprise applications/processes 201. Resource interface 209 monitors both local resources 205a-b and remote resources 206a-b to assist arbitration module 204 in its determinations. One will recognize numerous methods for implementing the interface 209, including polling the resources using either software callbacks, a notification queue, hardware interrupts, etc. or various combinations thereof.

Fig. 3 illustrates the relationship between the Resource Manager Module 208 and the Process 202a in greater detail. The Resource Manager Module 208 comprises a plurality of global operational profiles 301a-d. The global operational profiles may be specified by the system designer, but certain embodiments contemplate the device user or a third-party distributer creating or specifying the global operational profiles. Each global operational profile outlines certain general standards for operation that may apply across ecosystems, or be tailored for particular circumstances. For example, the global operational profile would specify if certain processes must receive priority over other processes. The global operational profile may also specify the requisite minimum resource allocations for the priority processes. During operation, the global operational profile may be compared with the ecosystem within the electronic device to determine the operational profiles that should be used for each process, or whether the process should be terminated. The operational profiles of new processes would likewise be considered in view of the global operational profile - if an acceptable operational profile exists the process is run, otherwise its operation will be deferred, perhaps indefinitely. Negotiation between the resource manager module and various processes/applications may occur to determine an optimal reallocation of the ecosystem resources, and the selection of each process' operational profile. Such reallocation may be initiated by the user, by selection or specification of a new global operational profile. In some embodiments, the arbitration module 204 is specifically designed to facilitate these negotiations. The arbitration module 204 thereby serves as one possible means for arbitrating between the application's operational profile and the global operational profile. The comparison and negotiation is described in greater detail below.

As mentioned, the application/process 202a also comprises one or more operational profiles 302a-c. Operational profiles are created by the application developer with reference to an API supplied in connection with the mobile device's operating software, or internal firmware. Rather than relating to general operations of the ecosystem, each operational profile 302 specifies a range of resource characteristics required for a given level of operation. For example, if the process 202a relates to rendering video to a display, a high definition display may require bus bandwidth and processor availability at a first set of thresholds, while low definition may only require values at a second set of lower thresholds. The operational profiles 302a-c specify each of these conditions (minimum levels 1, 2, 3, etc. for parameters of various resources A, B, C). The API may also provide a protocol so that processes are notified of transitions between operational profiles. In this manner, the process may perform "shutdown" operations, or call "transition functions" to provide graceful degradation of functionality. Such calls may also facilitate secure dismissals, where the application does not cease operation in an unsecure manner, but performs various "house cleaning" operations before terminating. In addition, the process 202a may be linked to a quality of service (QoS) module 203a that refers to, or comprises, a performance metric 303 generated by the developer when assessing operation based on a resource parameter.

Two examples are provided:

### Emergency Calls

Battery power comprises one of the mobile device's most essential resources. The global operational profile may specify that regardless of the various processes' power requirements, sufficient power must remain at all times such that an emergency call can be placed. Whether an emergency "text message" or call is to be made, may itself be specified in the global operational profile. In either event, all processes are introduced and run at profiles suitable to maintain this objective. The reception of communications may still be allowed but inhibited upon more adverse conditions. Eventually, the system may not allow any non-emergency communications or functionality (e.g. instant messaging, internet browsing, etc.). The transceiver 110 and peripheral interface 109 may be powered down, and processes only having operational profiles requiring their use will be terminated.

It should be kept in mind that a variety of suitable operational profile allocations may be had while the mobile device is in operation, prior to this "emergency state." The requirement for an emergency reserve would be but one of many constraints, which are considered during the periodically recurring negotiation process.

Additional functionality may be considered in the constraint definitions placed in the global operational profile. For example, mobile devices sometimes enter an emergency callback period lasting for several minutes after an emergency call is terminated. This allows a Public Safety Answer Point (PSAP) to locate the user. Considerations such as these would be included in the global operational profile's operation. A specific "dedicated battery management process" created by the system designer may be dedicated to managing these operations and providing emergency power management. Such a process may include "prebuilt functionality" and "predefined emergency messages" to limit both the need for time-critical user input, and to save power that the user interface 108, or transceiver 110 would use for a general purpose message.

### Subscription Media Service

In another example, the application developer is a subscription service which provides media, such as movies, to mobile-device users on a pay-per-view basis. "Pay-per-view" would comprise a time-sensitive collection of media which is not to be stored locally on the mobile device, but transmitted in real-time from a remote location. Such a service system requires proper authentication and security services to ensure that users do not abuse, or circumvent distribution limitations imposed by the provider. While some users may experience genuine power or transmission difficulties preventing their viewing of material which they properly paid for, more malicious users may simulate such events with the intention of replaying media for which they paid only a single viewing. Ideally, the system could distinguish between the two.

The application developer would provide operational profiles, and accompanying transition functions, so that as resources (power, bandwidth) become unavailable, a complete record of the degradation is stored and/or monitored either locally or remotely as part of a security check. When the resource again becomes available, and the user requests that the media be replayed, the application can refer to the log to determine how much viewing time is properly due to the user. Systems which use advertising to generate revenue could similarly use the system to verify that the required advertisements have been played, before providing the media.

As is clear from all these examples, the Resource Manager Module itself may have no preconceived notion of an application's "performance" or concept of "quality." Rather, it is left instead to the developer of the application to define functionality and associated operational profiles that may be used when a given set of resources are available. That is, it is the developer who determines what resource parameters are adequate, and when resources are so insufficient that they would rather the application not be run at all.

In certain embodiments, negotiation proceeds by the resource manager module first iterating through the priority processes to determine what resources it will reserve for their operation, in view of the specifications of the global operational profile. Once the minimum conditions are known for the priority processes, the resource manager module would then consult the nonpriority processes already running, or requesting to be run. The resource manager module may indicate the status of various resources to the processes, or the processes may make the determination themselves. In either event, the process will indicate the resource requirements of a preferred operational profile to the resource manager module. Having received these preferred conditions, the resource manager module may triage, based on the global operational profile, usage habits, and user preferences, and indicate to the process that the operational profile is acceptable, or that a less resource intensive alternative should be used. If the latter, then the process will respond with a more suitable operational profile. If no alternative profile exists, i.e. the process has iterated through all the operational profiles that it is willing to consider, then the process or the resource manager module can initiate a graceful termination of the process. In this manner, the previously described media program, for example, may transition through profiles requesting a bright display, with high definition, to a dim display with high definition, to a dim display with low definition, to finally the minimum resources necessary to execute a graceful termination. Ideally the system prompts the user in some instance, to provide them an opportunity to adjust the global operational profile, prior to terminating the process. Such notifications may be brought on the initiative of the resource manager module or the application. In some instances, the system may notify the user of the consequences in selecting one global operational profile over another. The resource manager module's activity may also be dictated by the currently active user profile (for example, if one spouse or sibling shares the mobile device with another). Linear programming or constraint based analysis algorithms may be used to identify optimal solution ecosystems given the constraints of various applications. One would readily recognize that a system of software callbacks, hardware interrupts, periodic polling, or various combinations could be used to accomplish the negotiation among a large number of processes. As noted, the user may specify a particular preference for each application.

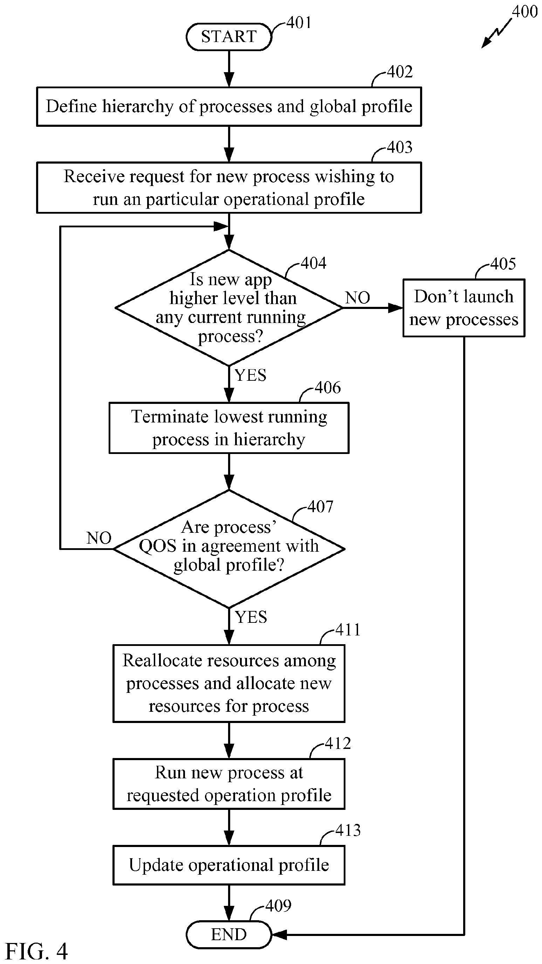

Below are described two possible embodiments for the introduction of new processes. One will readily recognize many variations to these methods and understand that these are merely indicative of the general approach, the steps of which may be performed in variations of the order presented here, and certain steps may be omitted altogether. Fig. 4, for example, illustrates a "try-and-die" process 400 wherein new processes are identified as part of a total ordering, and iteratively removed to find an optimal ecosystem in lieu of extensive negotiation. The process 400 begins at a start state 401 and then moves to a state 402 wherein the RMM definines a hierarchy of processes, typically in relation to the requirements of the global operational profile. This hierarchy permits a total ordering of all incoming and active processes. One will recognize that though a total order among the processes is described for simplicity, modifications to include partial orders or granular rule sets could be readily devised.

The process 400 then receives a request by another new process wishing to run a particular operational profile at a state 403. When a new process requests insertion at the state 403, a desired operational profile is included with its request so that the RMM may determine at the decision state 404 whether the new process is located at a higher position than any current running process in a hierarchy . This determination, and the new process' placement in the hierarchy, would be typically made with reference to the operational profiles available in the new process, the personal settings of the user, and the global file (i.e., accessing the process' operational profile). If the new process' ranking isn't higher than any current running process at the decision state 404, then the process 400 moves to a state 405 wherein the new process isn't launched. One could readily recognize alternative determinations at the decision state 404, for example determining if the proposed operational profile provided a more efficient system than the lowest running process' lowest operational profile. Alternatively, the process may be run, but using a secondary operational profile other than was requested.

If a determination is made at the decision state 404 that the new application is ranked more highly than at least one running process in the hierarchy, the lowest running process is terminated at a state 406 and a determination is made at a decision state 407 if the resulting QoS of the running profiles is in agreement with the global operational profile. If adequate QoS isn't available at the decision state 407 (i.e. one or more processes must use an operational profile at odds with requirements of the global operational profile), the process 400 loops back to decision state 404 wherein a determination is made whether a new application is at a higher level than any other running application. This method repeats, terminating processes until a suitable QoS is achieved, or until the new process is the lowest in the hierarchy, and prevented from running.

If enough processes are instead showing adequate QoS (i.e. they have identified an operational profile with which they are satisfied), at the decision state 407 based on the constraints of the global operational profile and available resources, then the new process is launched. The process 400 then moves to a state 411 wherein resources may be reallocated among the processes, or determined dynamically in order to launch the new process. The new process may be run at the requested operational profile at a state 412. Finally, the operational profile and global operational profile may be updated as necessary at a state 413 before the process 400 stops at an end state 409.

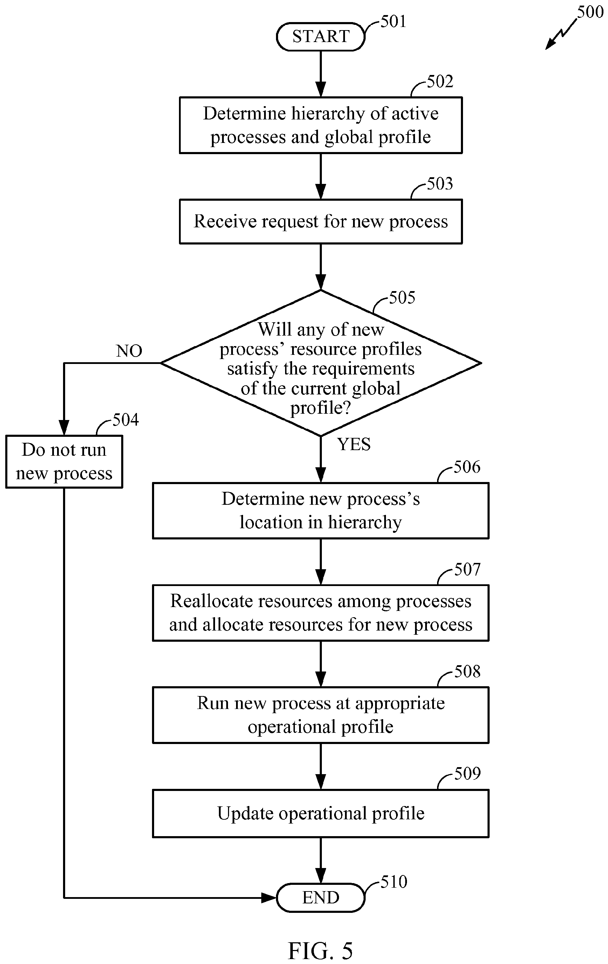

Fig. 5 illustrates yet another "predictive" approach, wherein the existing processes are favored over the new process. A process 500 starts at a start state 501 and then moves to a state 502 wherein a hierarchy of the active processes is determined based on the global operational profile. The process 500 then moves to state 503 wherein a request for a new process is received. The process 500 now moves to a decision state 505 and consults the operational profiles of the new process to determine if any of the operational profiles will satisfy the current global operational profile. In one embodiment, the process may also review the profiles of existing processes. If no suitable operational profile can be found in the new process at the decision state 505, or if none of the existing processes can be directed to new operational profiles based on the global operational profile, the process 500 moves to a state 504 wherein the new process will not be run. If a suitable selection is possible, however, the process 500 moves to state 506 to determine the new process' placement in the hierarchy of the system. The process 500 then moves to a state 507 wherein resources are re-allocated among the processes. In one embodiment, the resources are allocated by selection of an appropriate operational profile. The new process may then be run with its appropriate operational profile at a state 508 although, once instantiated, a new profile may be selected or updated based on the QoS of each process at a state 509. The subsequent reallocation after instantiation may be necessary in case of unforeseen side effects. The operation then ends at an end state 510, and the system awaits the introduction of the next process.

Thus, a novel and improved method and apparatus for shepherding various applications among various resources has been described. Those of skill in the art would understand that the various illustrative logical blocks, modules, circuits, and algorithm steps described in connection with the embodiments disclosed herein may be implemented as electronic hardware, computer software, or combinations of both. The various illustrative components, blocks, modules, circuits, and steps have been described generally in terms of their functionality. Whether the functionality is implemented as hardware or software depends upon the particular application and design constraints imposed on the overall system. Skilled artisans recognize the interchangeability of hardware and software under these circumstances, and how best to implement the described functionality for each particular application. As examples, the various illustrative logical blocks, modules, circuits, and algorithm steps described in connection with the embodiments disclosed herein may be implemented or performed with a digital signal processor (DSP), an application specific integrated circuit (ASIC), a field programmable gate array (FPGA) or other programmable logic device, discrete gate or transistor logic, discrete hardware components such as, e.g., registers and FIFO, a processor executing a set of firmware instructions, any conventional programmable software module and a processor, or any combination thereof. The processor may be a microprocessor, but in the alternative, the processor may be any conventional processor, controller, microcontroller, or state machine. The software module could reside in RAM memory, flash memory, ROM memory, registers, hard disk, a removable disk, a CD-ROM, or any other form of storage medium known in the art. Those of skill would further appreciate that the data, instructions, commands, information, signals, bits, symbols, and chips that may be referenced throughout the above description are represented by voltages, currents, electromagnetic waves, magnetic fields or particles, optical fields or particles, or any combination thereof.

The previous description of the preferred embodiments is provided to enable any person skilled in the art to make or use the disclosed embodiments. While several embodiments and examples have been disclosed in this description, the subject matter for which protection is sought is strictly and solely limited to those embodiments encompassing the wording of the appended claims. The other described embodiments are not part of the invention as claimed and are to be excluded from any kind of protection provided by the European Patent Convention..

## Claims

1. A resource management system for a mobile device comprising:
means for specifying at least one operational profile for an application of the mobile device, each operational profile specifying a configuration at which the application will operate;
means for specifying a global operational profile for the mobile device, the global operational profile specifying a global set of operational constraints for the mobile device including a requisite minimum resource allocation for at least one priority process to be prioritised;
means for arbitrating, at the mobile device, between the at least one operational profile and the global operational profile to allocate resources of the mobile device amongst the application and the priority process.

2. A mobile device resource management system according to claim 1, further comprising:
a plurality of software applications each comprising a quality of service module, the quality of service module for each software application comprising the means for specifying the at least one operational profile of the software application; and
wherein a resource manager module is configured as the means for specifying the at least one global operational profile and configured as the means for arbitrating and further configured to allocate resources amongst the plurality of software applications of the mobile device and the priority process depending on the operational profiles of the software applications and the global operational profile;.

3. The system of claim 2, wherein the resources comprise local hardware resources, local software resources comprising at least one of the plurality of software applications, remote hardware resources, and remote software resources.

4. The system of claim 3, wherein the operational profile of a first application makes reference to the operational profile of a second application.

5. The system of claim 2, wherein the local hardware resources comprise a transceiver.

6. The system of claim 5, wherein the resource manager module is configured to identify at least one of the operational profiles based at least in part on the bit-rate of the transceiver.

7. The system of claim 6, wherein at least one of the identified operational profiles specifies resource parameters for a decoder.

8. The system of claim 2, wherein at least one quality of service module comprises a first operational profile, a second operational profile, and a transition function, and
wherein the resource manager module is further configured to:
reallocate resources for the software application comprising the at least one quality of service module; and
execute the transition function upon transition from the first operational profile to the second operational profile, the transition function comprising a security check.

9. The system of claim 2, wherein the resource manager module is configured to periodically poll the resource parameters related to the operational profiles of the software applications.

10. A resource management method for a mobile device, the method comprising:
specifying at least one operational profile for an application of the mobile device, each operational profile specifying a configuration at which the application will operate;
specifying a global operational profile for the mobile device, the global operational profile specifying a global set of operational constraints for the mobile device including a requisite minimum resource allocation for at least one priority process to be prioritised;
arbitrating, at the mobile device, between the at least one operational profile and the global operational profile to allocate resources of the mobile device amongst the application and the priority process.

11. The method according to claim 10, further comprising:
in a plurality of software applications each comprising a quality of service module, using the quality of service module for each software application to specify the at least one operational profile of the software application; and
specifying the global operational profile in a resource management module and allocating resources at the resource management module.

12. The method according to either of claims 10 or 11, further comprising:
determining a hierarchy of active processes for one or more software applications, each active process associated with one of the software applications;
receiving a request for a new process for a software application;
accessing an operational profile of the new process; and
determining whether to launch the new process based on at least the operational profile of the new process and the global operational profile.

13. The method of Claim 12, wherein determining whether to launch the new process comprises:
determining the new process' placement in the hierarchy based on the operational profile of the new process; and
when the new process' placement in the hierarchy is lower than the active processes, preventing the launch of the new process.

14. The method of Claim12, further comprising terminating at least one process in the hierarchy when launching the new process.

15. A computer-readable medium comprising program instructions configured to be executed on a computer processor, the instructions configured to perform the method of any of claims 10 to 14.

## Patentansprüche

1. Ressourcenmanagementsystem für ein mobiles Gerät, das Folgendes umfasst:
Mittel zum Vorgeben wenigstens eines Betriebsprofils für eine Anwendung des mobilen Geräts, wobei jedes Betriebsprofil eine Konfiguration vorgibt, in der die Anwendung arbeiten wird;
Mittel zum Vorgeben eines globalen Betriebsprofils für das mobile Gerät, wobei das globale Betriebsprofil einen globalen Satz von Betriebsbeschränkungen für das mobile Gerät einschließlich einer erforderlichen Mindestressourcenzuweisung für wenigstens einen zu priorisierenden Prioritätsprozess vorgibt;
Mittel zum Arbitrieren, an dem mobilen Gerät, zwischen dem wenigstens einen Betriebsprofil und dem globalen Betriebsprofil zum Zuweisen von Ressourcen des mobilen Geräts unter der Anwendung und dem Prioritätsprozess.

2. Mobilgerät-Ressourcenmanagementsystem nach Anspruch 1, das ferner Folgendes umfasst:
eine Mehrzahl von Software-Anwendungen, die jeweils ein Dienstgütemodul umfassen, wobei das Dienstgütemodul für jede Software-Anwendung das Mittel zum Vorgeben des wenigstens einen Betriebsprofils der Sofware-Anwendung umfasst; und
wobei ein Ressourcenmanager-Modul als Mittel zum Vorgeben des wenigstens einen globalen Betriebsprofils und als Mittel zum Arbitrieren konfiguriert ist und ferner zum Zuordnen von Ressourcen unter der Mehrzahl von Software-Anwendungen des mobilen Geräts und dem Prioritätsprozess je nach den Betriebsprofilen der Software-Anwendungen und dem globalen Betriebsprofil konfiguriert ist.

3. System nach Anspruch 2, wobei die Ressourcen lokale Hardware-Ressourcen, lokale Software-Ressourcen umfassen, die wenigstens eines aus der Mehrzahl von Software-Anwendungen, fernen Hardware-Ressourcen und fernen Software-Ressourcen umfassen.

4. System nach Anspruch 3, wobei das Betriebsprofil einer ersten Anwendung auf das Betriebsprofil einer zweiten Anwendung Bezug nimmt.

5. System nach Anspruch 2, wobei die lokalen Hardware-Ressourcen einen Transceiver umfassen.

6. System nach Anspruch 5, wobei das Ressourcenmanager-Modul zum Identifizieren wenigstens eines der Betriebsprofile wenigstens teilweise auf der Basis der Bitrate des Transceivers konfiguriert ist.

7. System nach Anspruch 6, wobei wenigstens eines der identifizierten Betriebsprofile Ressourcen-Parameter für einen Decoder vorgibt.

8. System nach Anspruch 2, wobei wenigstens ein Dienstgütemodul ein erstes Betriebsprofil, ein zweites Betriebsprofil und eine Übergangsfunktion umfasst, und
wobei das Ressourcenmanager-Modul ferner konfiguriert ist zum:
Neuzuweisen von Ressourcen für die Software-Anwendung mit dem wenigstens einen Dienstgütemodul; und
Ausführen der Übergangsfunktion nach dem Übergang vom ersten Betriebsprofil auf das zweite Betriebsprofil, wobei die Übergangsfunktion eine Sicherheitsprüfung umfasst.

9. System nach Anspruch 2, wobei das Ressourcenmanager-Modul zum periodischen Abfragen der Ressourcenparameter in Bezug auf die Betriebsprofile der Software-Anwendung konfiguriert ist.

10. Ressourcenmanagement-Verfahren für ein mobiles Gerät, wobei das Verfahren Folgendes beinhaltet:
Vorgeben wenigstens eines Betriebsprofils für eine Anwendung des mobilen Geräts, wobei jedes Betriebsprofil eine Konfiguration vorgibt, in der die Anwendung arbeiten wird;
Vorgeben eines globalen Betriebsprofils für das mobile Gerät, wobei das globale Betriebsprofil einen globalen Satz von Betriebsbeschränkungen für das mobile Gerät inklusive einer erforderlichen Mindestressourcenzuweisung für wenigstens einen zu priorisierenden Prioritätsprozess vorgibt;
Arbitrieren, an dem mobilen Gerät, zwischen dem wenigstens einen Betriebsprofil und dem globalen Betriebsprofil zum Zuweisen von Ressourcen des mobilen Geräts unter der Anwendung und dem Prioritätsprozess.

11. Verfahren nach Anspruch 10, das ferner Folgendes beinhaltet:
Benutzen, in mehreren Software-Anwendungen, die jeweils ein Dienstgütemodul umfassen, des Dienstgütemoduls für jede Software-Anwendung zum Vorgeben des wenigstens einen Betriebsprofils der Sofware-Anwendung; und
Vorgeben des globalen Betriebsprofils in einem Ressourcenmanagement-Modul und Zuweisen von Ressourcen an dem Ressourcenmanagement-Modul.

12. Verfahren nach Anspruch 10 oder 11, das ferner Folgendes beinhaltet:
Bestimmen einer Hierarchie von aktiven Prozessen für eine oder mehrere Software-Anwendungen, wobei jeder aktive Prozess mit einer der Software-Anwendungen assoziiert ist;
Empfangen einer Anforderung für einen neuen Prozess für eine Software-Anwendung;
Zugreifen auf ein Betriebsprofil des neuen Prozesses; und
Feststellen, ob der neue Prozess gestartet werden soll, auf der Basis wenigstens des Betriebsprofils des neuen Prozesses und des globalen Betriebsprofils.

13. Verfahren nach Anspruch 12, wobei das Feststellen, ob der neue Prozess gestartet werden soll, Folgendes beinhaltet:
Bestimmen der Platzierung des neuen Prozesses in der Hierarchie auf der Basis des Betriebsprofils des neuen Prozesses; und
Verhindern des Starts des neuen Prozesses, wenn die Platzierung des neuen Prozesses in der Hierarchie niedriger ist als die der aktiven Prozesse.

14. Verfahren nach Anspruch 12, das ferner das Beenden wenigstens eines Prozesses in der Hierarchie beim Starten des neuen Prozesses beinhaltet.

15. Computerlesbares Medium, das Programmbefehle umfasst, die zum Ausführen auf einem Computer-Prozessor konfiguriert sind, wobei die Befehle zum Durchführen des Verfahrens nach einem der Ansprüche 10 bis 14 konfiguriert sind.

## Revendications

1. Système de gestion de ressources pour un dispositif mobile comprenant :
un moyen pour spécifier au moins un profil opérationnel pour une application du dispositif mobile, chaque profil opérationnel spécifiant une configuration à laquelle l'application fonctionnera ;
un moyen pour spécifier un profil opérationnel global pour le dispositif mobile, le profil opérationnel global spécifiant un ensemble global de contraintes opérationnelles pour le dispositif mobile comprenant une affectation de ressources minimales requises pour au moins un processus de priorité auquel accorder la priorité ;
un moyen pour arbitrer, au dispositif mobile, entre le au moins un profil opérationnel et le profil opérationnel global pour affecter des ressources du dispositif mobile parmi l'application et le processus de priorité .

2. Système de gestion de ressources de dispositif mobile selon la revendication 1, comprenant en outre :
une pluralité d'applications logicielles comprenant chacune un module de qualité de service, le module de qualité de service pour chaque application logicielle comprenant le moyen pour spécifier le au moins un profil opérationnel de l'application logicielle ; et
dans lequel un module gestionnaire de ressources est configuré comme le moyen pour spécifier le au moins un profil opérationnel global et configuré comme le moyen pour arbitrer et configuré en outre pour affecter des ressources parmi la pluralité d'applications logicielles du dispositif mobile et le processus de priorité en fonction des profils opérationnels des applications logicielles et du profil opérationnel global.

3. Système selon la revendication 2, dans lequel les ressources comprennent des ressources matérielles locales, des ressources logicielles locales comprenant au moins l'une de la pluralité d'applications logicielles, des ressources matérielles à distance et des ressources logicielles à distance.

4. Système selon la revendication 3, dans lequel le profil opérationnel d'une première application fait référence au profil opérationnel d'une deuxième application.

5. Système selon la revendication 2, dans lequel les ressources matérielles locales comprennent un émetteur-récepteur.

6. Système selon la revendication 5, dans lequel le module gestionnaire de ressources est configuré pour identifier au moins l'un des profils opérationnels sur la base en partie au moins du débit binaire de l'émetteur-récepteur.

7. Système selon la revendication 6, dans lequel au moins l'un des profils opérationnels identifiés spécifie des paramètres de ressources pour un décodeur.

8. Système selon la revendication 2, dans lequel au moins un module de qualité de service comprend un premier profil opérationnel, un deuxième profil opérationnel et une fonction de transition, et
dans lequel le module gestionnaire de ressources est configuré en outre pour :
réaffecter des ressources pour l'application logicielle comprenant le au moins un module de qualité de service ; et
exécuter la fonction de transition lors de la transition du premier profil opérationnel au deuxième profil opérationnel, la fonction de transition comprenant un contrôle de sécurité.

9. Système selon la revendication 2, dans lequel le module gestionnaire de ressources est configuré pour interroger périodiquement les paramètres de ressources associés aux profils opérationnels des applications logicielles.

10. Procédé de gestion de ressources pour un dispositif mobile, le procédé comprenant :
spécifier au moins un profil opérationnel pour une application du dispositif mobile, chaque profil opérationnel spécifiant une configuration à laquelle l'application fonctionnera ;
spécifier un profil opérationnel global pour le dispositif mobile, le profil opérationnel global spécifiant un ensemble global de contraintes opérationnelles pour le dispositif mobile comprenant une affectation de ressources minimales requises pour au moins un processus de priorité auquel accorder la priorité ;
arbitrer, au dispositif mobile, entre le au moins un profil opérationnel et le profil opérationnel global pour affecter des ressources du dispositif mobile parmi l'application et le processus de priorité .

11. Procédé selon la revendication 10, comprenant en outre :
dans une pluralité d'applications logicielles comprenant chacune un module de qualité de service, utiliser le module de qualité de service pour chaque application logicielle pour spécifier le au moins un profil opérationnel de l'application logicielle ; et
spécifier le profil opérationnel global dans un module de gestion de ressources et affecter des ressources au module de gestion de ressources.

12. Procédé selon l'une ou l'autre des revendications 10 ou 11, comprenant en outre :
déterminer une hiérarchie de processus actifs pour une ou plusieurs applications logicielles, chaque processus actif étant associé à l'une des applications logicielles ;
recevoir une requête pour un nouveau processus pour une application logicielle ;
accéder à un profil opérationnel du nouveau processus ; et
déterminer si lancer le nouveau processus sur la base d'au moins le profil opérationnel du nouveau processus et le profil opérationnel global.

13. Procédé selon la revendication 12, dans lequel déterminer si lancer le nouveau processus comprend :
déterminer le placement du nouveau processus dans la hiérarchie sur la base du profil opérationnel du nouveau processus ; et
lorsque le placement du nouveau processus dans la hiérarchie est plus bas que les processus actifs, empêcher le lancement du nouveau processus.

14. Procédé selon la revendication 12, comprenant en outre terminer au moins un processus dans la hiérarchie lors du lancement du nouveau processus.

15. Support lisible par ordinateur comprenant des instructions de programme configurées pour être exécutées sur un processeur d'ordinateur, les instructions étant configurées pour mettre en oeuvre le procédé selon l'une quelconque des revendications 10 à 14.
